(19) **Europäisches Patentamt / European Patent Office / Office européen des brevets**

(11) **EP 3 524 927 B1**

(12) **EUROPEAN PATENT SPECIFICATION**

(45) Date of publication and mention
of the grant of the patent:
**30.03.2022 Bulletin 2022/13**

(21) Application number: **17858109.6**

(22) Date of filing: **29.08.2017**

(51) International Patent Classification (IPC):
**G01B 11/24** (2006.01)    **G01B 11/245** (2006.01)
**G01B 11/25** (2006.01)

(52) Cooperative Patent Classification (CPC):
**G01B 11/245; G01B 11/24; G01B 11/2522**

(86) International application number:
**PCT/JP2017/030916**

(87) International publication number:
**WO 2018/066270 (12.04.2018 Gazette 2018/15)**

(54) **METHOD AND DEVICE FOR MEASURING EXTERNAL SHAPE OF RAILROAD VEHICLE**

VERFAHREN UND VORRICHTUNG ZUR MESSUNG DER ÄUSSEREN FORM EINES
SCHIENENFAHRZEUGS

PROCÉDÉ ET DISPOSITIF DE MESURE DE LA FORME EXTERNE D'UN VÉHICULE FERROVIAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.10.2016 JP 2016198011**

(43) Date of publication of application:
**14.08.2019 Bulletin 2019/33**

(73) Proprietor: **Hitachi, Ltd.
Tokyo 100-8280 (JP)**

(72) Inventors:
• **BABA, Shuichi**
  **Tokyo 100-8280 (JP)**
• **OKADA, Norihisa**
  **Tokyo 100-8280 (JP)**
• **WATANABE, Masahiro**
  **Tokyo 100-8280 (JP)**
• **TANIGUCHI, Atsushi**
  **Tokyo 100-8280 (JP)**
• **TAKAGI, Shunichi**
  **Hitachi-shi**
  **Ibaraki 317-0073 (JP)**

(74) Representative: **Strehl Schübel-Hopf & Partner
Maximilianstrasse 54
80538 München (DE)**

(56) References cited:
EP-A1- 1 600 351         JP-A- 2008 008 651
JP-A- 2012 007 950       JP-A- 2012 007 950
US-A1- 2012 098 963      US-A1- 2014 132 721
US-A1- 2016 261 791

**EP 3 524 927 B1**

# Description

[Technical Field]

The present invention relates to a method and device for measuring external shape of a railroad vehicle that measures the external shape of the railroad vehicle using light in a noncontact manner.

[Background Art]

In a railroad vehicle, critical range of cross-sectional dimension of vehicle body that the vehicle must satisfy called vehicle gauge is determined by respective railway companies, and each railroad vehicle manufacturer inspects whether any part of the completed vehicle exceeds the vehicle gauge before shipping the vehicle body.

One conventional method that has been performed for inspecting the vehicle gauge relates to building a frame (limit gauge) that shapes the vehicle gauge dimension so as to surround the vehicle, and moving the vehicle through the frame while having multiple workers confirm that the vehicle does not contact the frame.

If the vehicle contacts the frame, the vehicle is stopped, and multiple workers confirm the state of contact, the positional relationship between the vehicle structure and the underframe and the positional relationship between the wheels and the rail in order to investigate causes. As described, the prior art method had a drawback in that, in addition to having to build and install frames for each vehicle type, inspection operation performed by multiple workers required much labor and operation time, so it is important to reduce these operations (automation of measurement) from the viewpoint of cutting down LT of vehicle fabrication and reducing costs.

As a method for performing automatic vehicle gauge inspection, Patent Literature 1 discloses a method for irradiating a plurality of laser beams linearly to an outer peripheral surface of a moving vehicle, detecting laser projection lines formed on an outer periphery of the vehicle surface by irradiation (hereinafter referred to as light section line) using camera, calculating an external shape of the vehicle based on the detected light section lines, and displaying the result on whether the vehicle gauge has been exceeded and the location where the gauge has been exceeded in a visually confirmable manner.

[Citation List]

[Patent Literature]

[PTL 1] Japanese Patent Application Laid-Open Publication No. 2012-007950

[Summary of Invention]

[Technical Problem]

In the method disclosed in Patent Literature 1, external shape of the vehicle can be measured in a noncontact manner by using laser beams.

In this state, since reflectivity of the laser beam varies greatly by paint color applied to the vehicle, the dispersion of intensity of light section lines due to the difference in paint color is a drawback in detecting light section lines.

In consideration of the above problems, the present invention aims at providing a method for measuring external shape of a railroad vehicle using laser beams, according to which the influence of paint color of the vehicle is reduced, and highly accurate high-speed measurement of external shape is enabled.

[Solution to Problem]

In order to solve the above-mentioned problems, the invention provides a method and a device for measuring the external shape of a railroad vehicle as set forth in the appended claims.

[Advantageous Effects of Invention]

According to the present invention, measurement of external shape of the vehicle can be performed highly accurately and in a short time while moving the vehicle by reducing the effect of paint color of the vehicle.

[Brief Description of Drawings]

[FIG. 1A] FIG. 1A is a perspective view illustrating a configuration of a device for measuring the external shape of a railroad vehicle according to a first embodiment of the present invention.
[FIG. 1B] FIG. 1B is a front view illustrating a configuration of the device for measuring the external shape of a railroad vehicle illustrated in FIG. 1A.
[FIG. 2] FIG. 2 is a configuration diagram illustrating a configuration of a light section sensor according to a first embodiment of the present invention.
[FIG. 3] FIG. 3 is a timing chart of laser beam intensity modulation and photographing timing of light section line according to the first embodiment of the present invention.
[FIG. 4] FIG. 4 is a flowchart illustrating a flow of external shape measurement of the railroad vehicle according to the first embodiment of the present invention.
[FIG. 5] FIG. 5 is a flowchart illustrating a subroutine processing for calculating the external shape of a vehicle illustrated in FIG. 4.

[FIG. 6] FIG. 6 is a flowchart illustrating a flow of external shape measurement (modified example of FIG. 4) of the railroad vehicle according to the first embodiment of the present invention.

[FIG. 7] FIG. 7 is a configuration diagram illustrating a configuration of a light section sensor according to a second embodiment of the present invention.

[FIG. 8] FIG. 8 is a flowchart illustrating a subroutine processing for calculating the external shape of the vehicle illustrated in FIG. 7.

[FIG. 9A] FIG. 9A is a configuration diagram illustrating a configuration of a device for measuring the external shape of a railroad vehicle according to a third embodiment of the present invention.

[FIG. 9B] FIG. 9B is a front view illustrating a configuration of a device for measuring the external shape of a railroad vehicle illustrated in FIG. 9A.

[FIG. 10A] FIG. 10A is an explanatory view illustrating a detection image of light section line of string according to the third embodiment of the present invention.

[FIG. 10B] FIG. 10B is a partially enlarged view illustrating a relationship between side surface of vehicle and light section line of linear object in a field range illustrated in FIG. 10A.

[FIG. 11] FIG. 11 is a flowchart illustrating a flow of measurement of external shape of the railroad vehicle according to the third embodiment of the present invention.

[FIG. 12] FIG. 12 is a flowchart illustrating a subroutine processing of calculation and correction of amount of meandering of vehicle illustrated in FIG. 11.

[FIG. 13] FIG. 13 is an explanatory view illustrating examples of position variation measurement data of string according to the third embodiment of the present invention.

[Description of Embodiments]

The present invention relates to a method and device for measuring external shape of a vehicle, enabling to perform highly accurate measurement of the external shape of the vehicle by selecting an appropriate laser beam intensity or wavelength image from among a plurality of light section images acquired while changing measurement laser beam intensities of a single wavelength or multiple wavelengths. Embodiments of the present invention will be described below with reference to the drawings.

First Embodiment

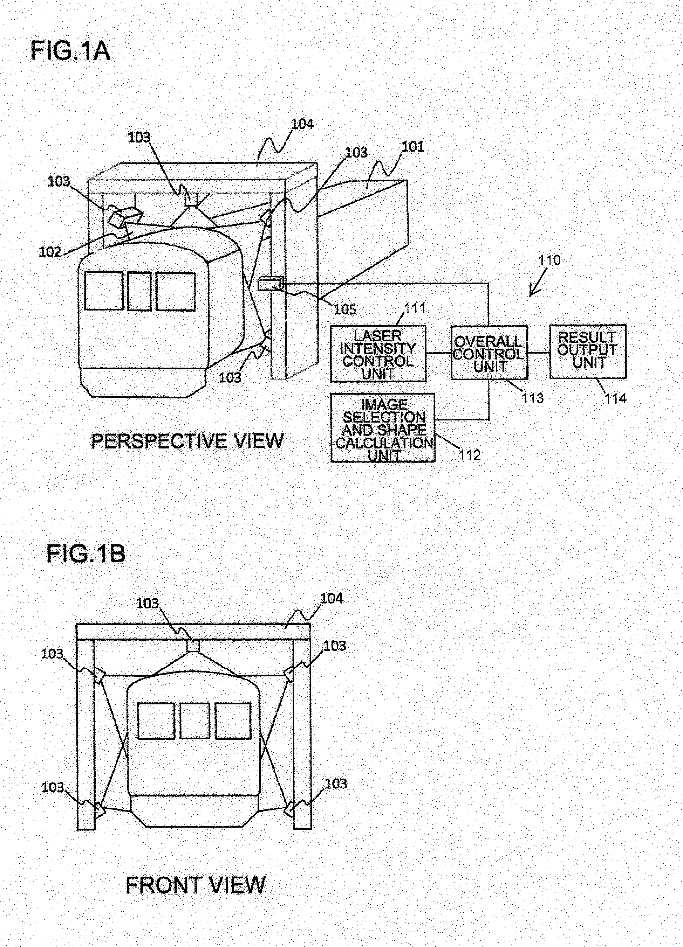

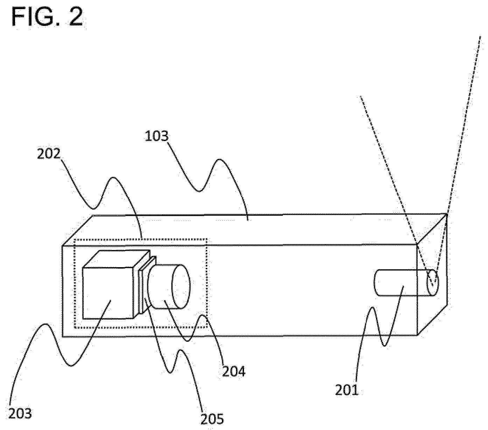

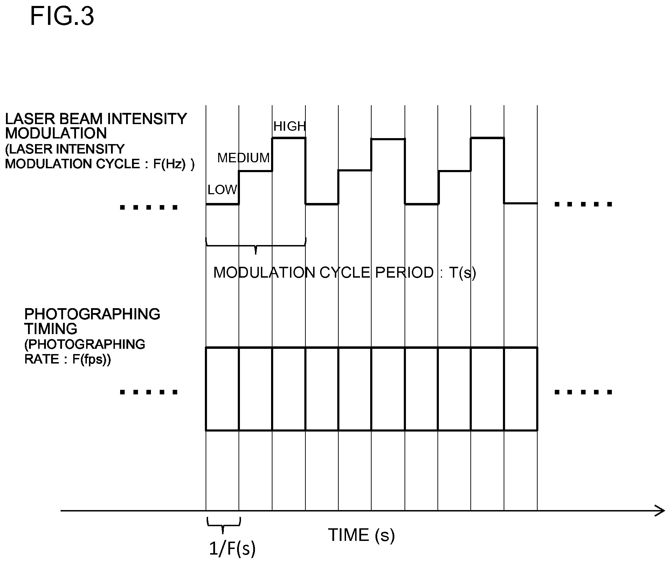

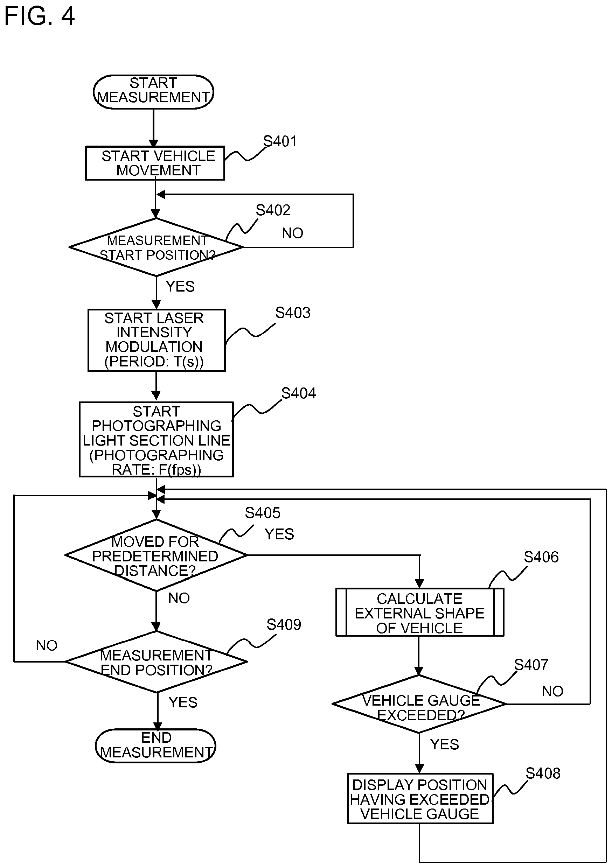

Now, a method for measuring external shape of railroad vehicle according to a first embodiment of the present invention will be described with reference to FIGs. 1 through 5.
FIGs. 1A and 1B illustrate an example of a configuration of the device for measuring the external shape of a railroad vehicle according to the first embodiment. The device includes a plurality of light section sensors 103 that irradiate linear laser beams 102 to a surface of a vehicle 101 and photograph the linear laser beams 102 (hereinafter referred to as light section lines) projected on the surface of the vehicle 101, a sensor rack 104 installing the plurality of light section sensors 103 to surround the vehicle on a rail, a vehicle moving distance measurement sensor 105 for measuring the moving distance of the vehicle from a reference position, and a measurement processing mechanism 110.
The measurement processing mechanism 110 is configured of a laser intensity control unit 111 that changes the intensities of the linear laser beams 102 at predetermined time intervals, an image selection and shape calculation unit 112 that selects a light section line image of a laser beam intensity most suitable for the measurement position among from the photographed images of the light section line of the respective linear laser beams 102 with the intensities changed and calculates the external shape of the vehicle from the selected light section line image, an overall control unit 113 that performs control of respective equipment and that determines whether vehicle gauge has been exceeded, and a result output unit 114 that outputs the processing result of the overall control unit 113.
The light section sensor 103 includes, as illustrated in FIG. 2, a laser source unit 201 that irradiates the linear laser beams 102, and a photographing unit 202 that photographs the linear laser beam 102 projected on the surface of the vehicle 101.
The photographing unit 202 is configured of a photographing camera 203, an imaging lens 204, and a narrow-band filter 205.
The imaging lens 204 of the photographing camera 203 should be as wide-angled as possible to widen the field range of the respective light section sensors and cover the whole area of the outer periphery of the vehicle using a small number of light section sensors.
Further, since only the light in the vicinity of wavelength of the laser beam that each light section sensor mounts is passed through the narrow-band filter 205, amount of ambient light can be suppressed significantly.
The intensity of the linear laser beam 102 irradiated from the laser source unit 201 is changed in several steps by fixed frequencies: F (Hz) so as to synchronize with photographing rates: F (fps) of the photographing unit 202 by controlling applied voltage by the laser intensity control unit to the laser controller, as illustrated in FIG. 3, and the laser source unit 201 is controlled to repeat this operation in laser intensity modulation cycle periods: T(s).
Next, a flow of measurement in executing the present invention will be described with reference to FIG. 4.
Along with the starting of measurement, the vehicle 101 starts moving from a rear side of the rack 104 toward the rack (step S401).

After movement is started, moving distance of the vehicle 101 is monitored to determine whether the vehicle has reached a measurement start position set in advance (step S402), changing the intensity of the linear laser beams irradiated from the respective light section sensors in several steps for fixed frequencies: F(Hz) from the point in time when the vehicle has moved to the measurement start position set in advance (step S403), and photographing the light section lines successively by the photographing unit 202 using a preset photographing rate: F (fps) (step S404).

During measurement, the moving distance of the vehicle 101 is continuously monitored by the vehicle moving distance measurement sensor 105, and each time the vehicle moves for a predetermined distance (step S405), calculation of external shape of the vehicle based on the photographed light section lines (step S406) and determination on whether a vehicle gauge has been exceeded (whether all coordinate points of the external shape of the vehicle being measured is within a coordinate range indicating the vehicle gauge) are performed (step S407), wherein if the vehicle gauge has been exceeded, the points having exceeded the vehicle gauge are displayed (step S408).

Steps S401 through S408 are repeated until it has been determined that the measurement position of the vehicle 101 has reached a measurement end position set in advance (step S409), and areas having exceeded the vehicle gauge are displayed for all measurement positions of the vehicle.

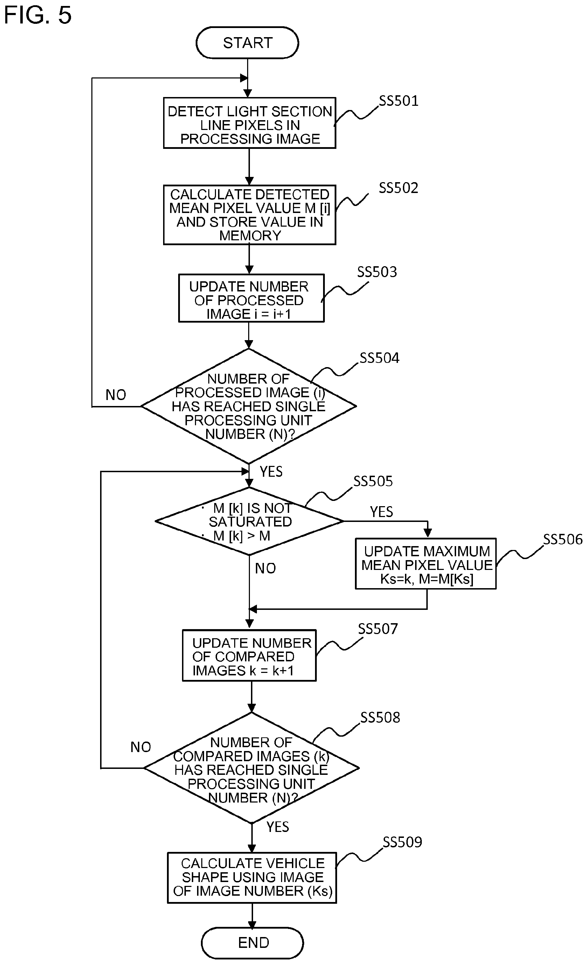

In the following description, a flow of the process for calculating external shape of the vehicle illustrated in S406 of FIG. 4 will be described with reference to a flowchart showing a subroutine of the calculation of external shape of the vehicle illustrated in FIG. 5.

In the photographed images, images in which laser intensities irradiated for each laser intensity modulation cycle are varied in multiple steps are repeatedly included in each laser intensity modulation cycle: T (s), so that processing is performed by setting images within the same laser intensity modulation cycle as a single processing unit.

In this case, the number of images included in a single processing unit: N can be calculated from N = T × F based on the laser intensity modulation cycle period: T (s) and the photographing rate: F (fps).

After starting the process, detection of light section line pixels by detecting that the value of pixels has exceeded a threshold value in the respective photographed images having different measurement laser beam intensities (step SS501), calculation of mean pixel value: M [i] of pixels detected as light section lines in the respective photographed images and storage of calculated value to the memory are performed (step SS502), and a count value of number of processed images: i is updated (step SS503).

Next, determination on whether the number of processed image has reached the single processing unit number is performed (step SS504), and if the number of processed images has reached the single processing unit number, detected mean pixel values: M [i] of the respective photographed images calculated in SS502 are compared, and the light section line having the highest mean value is selected. In this state, since the accuracy of the calculated shape will be deteriorated if the pixel value of the light section line is saturated, determination is performed on whether the mean pixel value of the detected pixels has not reached the saturation value of pixels and the value is the highest value (step SS), and if the determination condition of SS505 is satisfied, a maximum mean pixel value: M and image number where the mean pixel value becomes maximum: ks are updated (step SS506).

Next, the number of compared images whose mean values are compared: k is updated (step SS507) to determine whether the number of compared images: k has reached the single processing unit number: N (step SS508), and calculation of external shape of the vehicle is performed using the light section line of the image number: ks having the highest detected mean pixel value at the point in time when the number of compared images: k has reached the number of single processing unit: N (step SS509).

The calculation processing of external shape of the vehicle described above can also be performed after vehicle movement is completed.

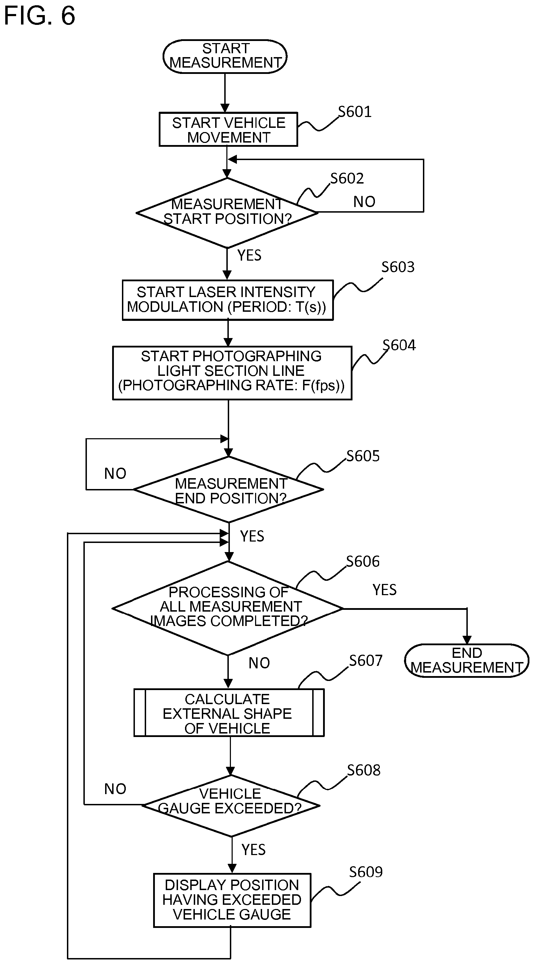

As a modified example of FIG. 4, a flow of performing the calculation processing of external shape of the vehicle after completing vehicle movement will be described with reference to FIG. 6.

In this case, the processing performed from steps S601 through S604 is the same as FIG. 4, but in FIG. 6, calculation of external shape of the vehicle is not performed while the vehicle is moving, and after determining that the vehicle has reached the measurement end position (step S605), the process of calculating the external shape of the vehicle (step S607) and the process of determining whether vehicle gauge has been exceeded (step S608) are performed until the processing of all measurement images has been completed (step S606), and as for the position determined to have exceeded the vehicle gauge is displayed, similar to FIG. 4 (step S609).

In the method for measuring the external shape of railroad vehicle, normally, the amount of reflected light of the laser beam for measurement is affected greatly by the paint color, but according to the first embodiment of the present invention, the laser beam intensity of light section line used for measurement can be selected, so that deterioration of shape accuracy caused by using an inappropriate laser intensity (too strong or too weak) with respect to the paint color of the vehicle can be reduced, and highly accurate shape measurement is enabled.

Second Embodiment

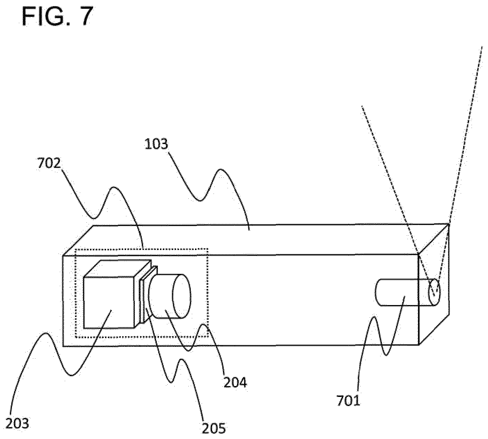

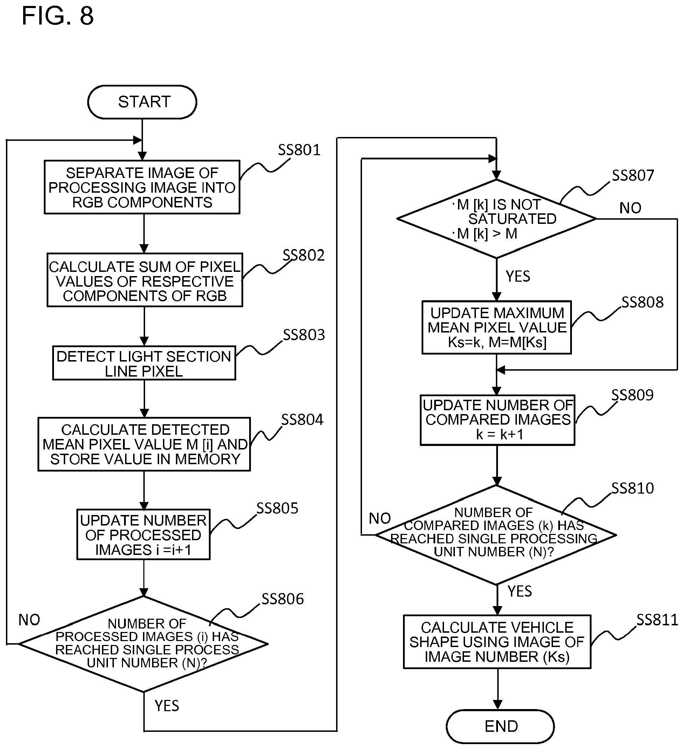

Now, a method for measuring external shape of railroad vehicle according to a second embodiment of the present invention will be described with reference to FIGs. 7 and 8. The same configurations as the first embodiment are denoted with the same reference numbers and descriptions thereof are omitted.

The present second embodiment characterizes in that, as illustrated in FIG. 7, a laser source unit 701 capable of generating multiple wavelengths corresponding to a wavelength range of respective pixels corresponding to RGB (red, green and blue) of a color camera is provided, and a color camera 702 is used as imaging camera.

If a color camera is used as the imaging camera, since a color filter allowing light of a corresponding wavelength range for each RGB pixel to pass through is mounted, amount of ambient light out of the corresponding wavelength range can be suppressed significantly for the respective RGB pixels, and an advantage is realized where signal to noise ratio (SN ratio) is improved compared to the case where a monochrome camera is used.

Lights of multiple wavelengths can be generated by preparing multiple laser devices of wavelengths respectively corresponding to R, G and B, or by using a laser having a wide wavelength range covering R, G and B.

If multiple laser sources are used, light paths of light irradiated from multiple laser sources are bundled by an optical element and irradiated as a single laser beam, and if intensity modulation of laser beam is to be performed, the intensity of multiple laser beams is changed at the same timing. The flow of measurement for carrying out the present invention is the same as that illustrated in FIG. 4 or FIG. 6.

The following describes a process for calculating the external shape of a vehicle based on the photographed light section lines (S406 of FIG. 4, S607 of FIG. 6) with reference to a subroutine flowchart of calculation of external shape of vehicle illustrated in FIG. 8.

Similar to the first embodiment, photographed images in which laser intensities are varied in multiple steps are repeatedly included in each laser intensity modulation cycle of the photographed images, so that processing is performed by setting images within the same laser intensity modulation cycle as a single processing unit.

When processing is started, detection of light section line pixels is performed by detecting pixels whose pixel value has exceeded a threshold value set in advance in the respective photographed images of different measurement laser beam intensities, whereas in the present embodiment, light section lines of light having multiple wavelengths are photographed using color camera, so that respective photographed images having different measurement laser beam intensities are separated into RGB component images (step SS801).

In this state, as already well known, light section line of light having a wavelength of red appears strongly in R component image, light section line of light having a wavelength of green appears strongly in G component image, and light section line of light having a wavelength of blue appears strongly in B component image.

Next, the sum of pixel values of respective components of R, G and B are calculated (step SS802), and determination of threshold with respect to the sum of pixel values of selected RGB components is performed to detect light section line pixels (step SS803).

Calculation of mean value: M [i] of the sum of pixel values of pixels detected as light section lines and storage of the calculated value to the memory is performed (step SS804), and count value of the number of processed images: i is updated (step SS805), to determine whether the number of processed images has reached the single processing unit number (step SS806).

If the number of processed images has reached the single processing unit number, the mean values of detected pixel values of respective photographed images calculated in SS804 are compared, and the light section line having the highest mean value is selected.

Similar to the first embodiment, the shape calculation accuracy is deteriorated if the pixel value of the light section line is saturated, so that whether the mean pixel value of the detected pixel has not reached the pixel saturation value and whether the value is the highest value is determined (step SS807), and if the determination condition of SS807 is satisfied, the maximum mean pixel value: M and the image number: ks where the mean pixel value becomes maximum are updated (step SS808).

Next, the number of images having mean values compared: k is updated (step SS809), whether the number of compared images: k has reached the single processing unit number: N is determined (step SS810), and calculation of external shape of the vehicle is performed using the light section line of the image number: ks having the highest detected mean pixel value at the point in time when the number of compared images: k has reached the single processing unit number: N is performed (step SS811).

In the method for measuring external shape of railroad vehicle according to the second embodiment of the present invention, in addition to the modulation of measurement laser intensity described in the first embodiment, it is also possible to consider the combination of measurement laser wavelengths with respect to paint color in detecting light section lines.

Therefore, if reflectivity of paint color with respect to the wavelength of laser beam for measurement is extremely low and the detection intensity of light section line is insufficient, by increasing the laser intensity when only one type of wavelength is used in the laser beam for measurement, accurate measurement is enabled by using laser beams having wavelengths where reflectivity of the paint color becomes higher.

Third Embodiment

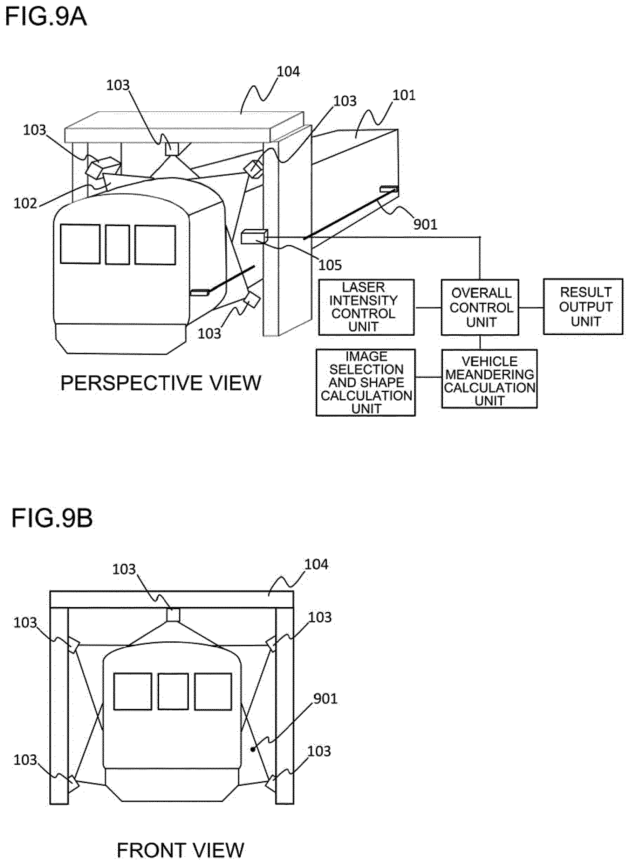

Now, a method for measuring external shape of railroad vehicle according to a third embodiment of the present invention will be described with reference to FIGs. 9 through 13. Components that are the same as the first and second embodiments are denoted with the same reference numbers, and descriptions thereof are omitted.

FIGs. 9A and 9B illustrate one example of a configuration of a device for measuring the external shape of a railroad vehicle according to the present embodiment.

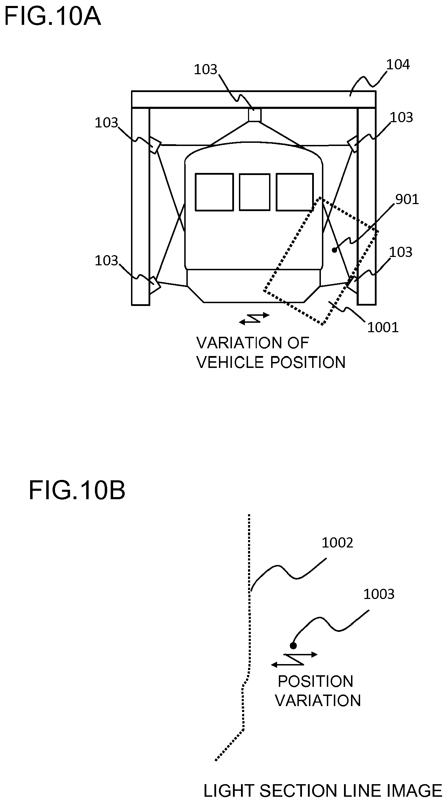

In the present third embodiment, a linear object 901 serving as a reference line is attached to cover both ends of the side surface of the railroad vehicle, and linear laser beams 102 are irradiated on the side surface of the linear object 901 serving as the reference line in addition to the side surface of vehicle, to thereby simultaneously detect a light section line 1002 of the side surface of the vehicle and a light section line 1003 of the linear object 901 illustrated in FIG. 10B in a field range 1001 of the light section sensor illustrated in FIG. 10A.

Then, amount of deviation of the vehicle from a reference position of rail is calculated based on position variation of the light section line 1003 caused by meandering of the vehicle, and correction of the calculated result in the image selection and shape calculation unit is performed by the calculated result.

An object having ensured straightness in the order of submillimeter is preferable as the linear object 901 serving as the reference line, but since the whole length of the railroad vehicle is generally as long as approximately 20 meters, it is difficult to manufacture an object having an ensured straightness in the order of submillimeter to cover the whole length of the railroad vehicle.

If the linear object itself serving as the reference line is meandered from the reference position, it is difficult to determine whether the position variation of light section line by the linear object 901 is caused by the meandering of the line object 901 itself serving as the reference line or whether it is caused by the meandering of the vehicle.

Therefore, in the present embodiment, an example is described where an object such as a string (or cord) that is not meandered if tension is applied is used.

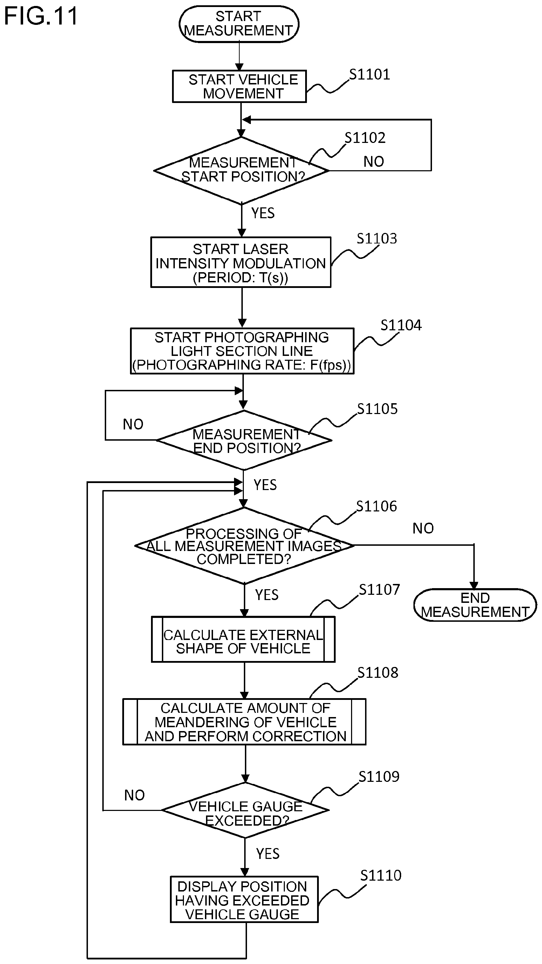

FIG. 11 illustrates a flow of measurement of a case where the method for measuring external shape of railroad vehicle according to the third embodiment is performed.

Steps S1101 through S1103 are the same as steps S401 through S403 of FIG. 4, but during photographing of light section line in S1104, light section lines of the side surface of the vehicle and the linear object 901 are detected simultaneously, and after completing measurement, calculation and correction of the external shape of the vehicle and the amount of meandering of vehicle are performed.

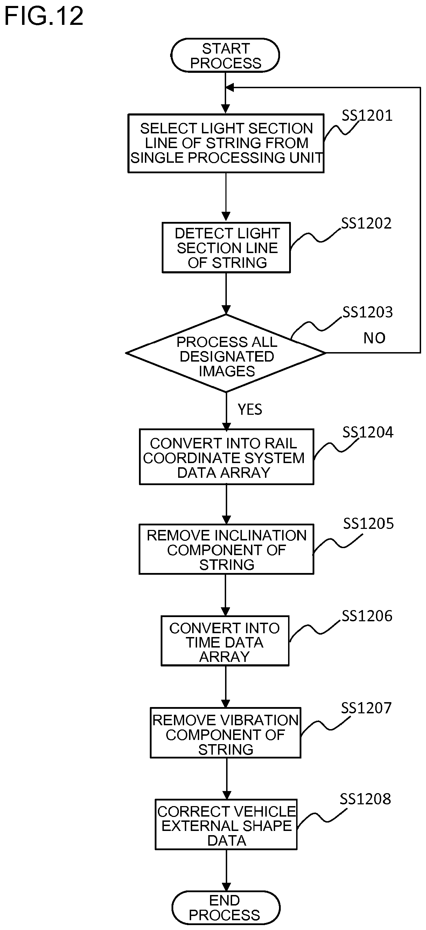

In the following description, the flow of the process for calculating and correcting the amount of meandering of vehicle based on the light selection line of the string being photographed (step S1108 illustrated in FIG. 11) will be described with reference to a subroutine flowchart of calculation and correction of amount of meandering of vehicle illustrated in FIG. 12.

Similar to the first embodiment, photographed images in which laser intensities are varied in multiple steps are repeatedly included in each laser intensity modulation cycle of the photographed images, so that processing is performed by setting images within the same laser intensity modulation cycle as a single processing unit.

In this case, the most preferable laser beam intensity can be determined in advance by using a string having the same color and quality across the whole length, the light selection line of the laser beam intensity determined in advance is selected from among the single process images (step SS1201), and light selection line of the string is detected by detecting the pixel having a pixel value that exceeds a threshold value set in advance (step SS1202), and thereafter, the processes of SS1201 and SS1202 are repeatedly performed for all designated photographed images (step SS1203).

In order to calculate the position variation of string based on the light section line of the string detected in step SS1202, a linear position deviation along a direction perpendicular to the rail caused by the string not being positioned completely in parallel with the rail (inclination component of string) and vibration of the string caused by the movement of the vehicle (vibrational component of string) are superposed in the light section line data, so that it is necessary to remove the effect of these components on the light section line position of the string.

The inclination component of the string is linear to the rail direction position, so data array of the light section line of the string detected in step SS1202 is converted into a rail coordinate system data array where the rail direction position and position perpendicular to the rail are set as coordinate axes (step SS1204), the linear component in the data array is calculated by fitting the linear expression to the data array, and removing the linear component (inclination component of string) from the data array (step SS1205).

Next, since the vibration component of the string includes a component that varies in fixed cycles, the data array of the light section line of the string after removing the linear component is converted into time data array in which the data sampling time and position in the direction perpendicular to the rail are set as coordinate axes (step SS1206), the vibrational component of the string is removed using a low pass filter capable of removing the vibration period of the string (step SS1207), and data array of light section line of the string having removed the inclination component of the string and the vibration component of the string (position variation data of string) is acquired.

As described, the data of light section line of the string is data acquired at fixed time intervals (intervals of laser intensity modulation cycle period) by determining the laser beam intensity in advance, so that the filtering process can be performed easily.

Moreover, period of vibration of the string can be expressed by expression (1) based on tension for stretching the string and the value of linear density of the string, and the actual vibration is a composition of a plurality of orders of modes, but by applying a low pass filter that removes frequencies greater than a primary mode having the lowest vibration frequency, vibration components of multiple modes can be removed.

[Expression 1]

$$fn = \frac{n}{2l}\sqrt{\frac{S}{\rho}} \quad \cdots \cdot (1)$$

[S: tension of string (N), p: linear density of string (kg/m), l: length of code (m), n: nth mode vibration]

Lastly, the position variation data array of the string in the perpendicular direction of the rail acquired in step SS1207 is added to or subtracted from external shape data of the vehicle acquired by light section sensors, by which the correction of error of external shape of the vehicle caused by meandering of the vehicle is performed (step SS1208).

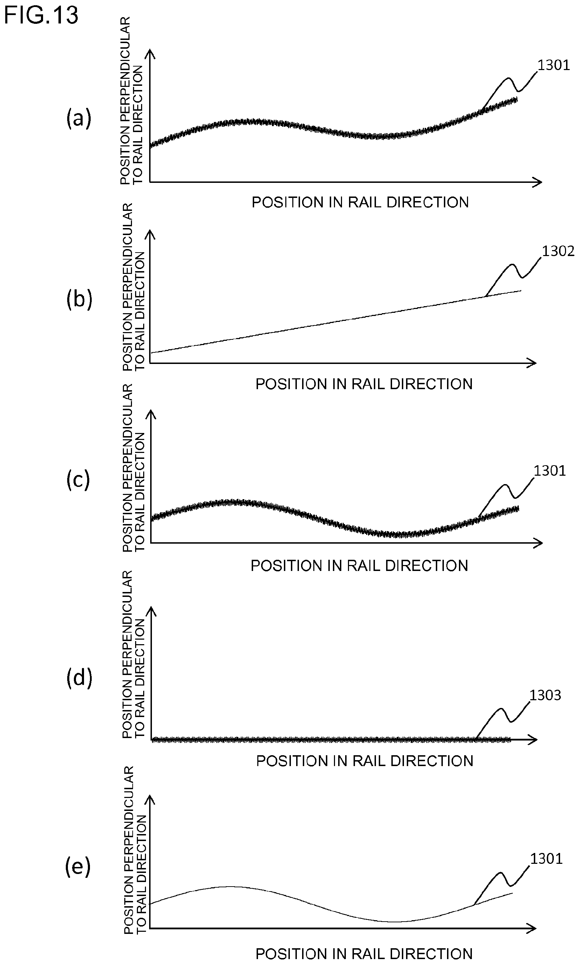

Next, an example of position variation measurement data of the string will be described with reference to FIG. 13. FIG. 13 has extracted a partial section of data from among the position variation data of the string acquired for the whole length of the vehicle.

Data array 1301 of FIG. 13a illustrates a data array of the detected light section line of the string converted into a rail coordinate system in which the position in the rail direction and position in the direction perpendicular to the rail are set as coordinate axes, and data array 1302 of FIG. 13B illustrates a linear component (inclination component of string) acquired by fitting a linear expression to data array 1301 of FIG. 13A.

Data array 1301 of FIG. 13C is acquired by removing the component of 1302 of FIG. 13B from 1301 of FIG. 13A, and data array1301 of FIG. 13E illustrating a position variation data array of the string caused by meandering of the vehicle can be acquired by removing 1303 of FIG. 13D corresponding to a vibration component of the string by applying a low pass filter to 1301 of FIG. 13C.

In the method for measuring external shape of railroad vehicle according to the third embodiment of the present invention, laser beams for measuring the external shape of the vehicle is used to measure the amount of deviation of position of the linear object 901 simultaneously as measuring the side surface of the vehicle, the cross section of the side surface of vehicle being measured and the amount of positional deviation in the same cross section can be detected highly accurately, and the measurement accuracy of the external shape of the vehicle can be improved.

The present invention is not limited to the embodiments illustrated above, and various modifications are included. For example, the above-described embodiment is illustrated in detail to help understand the present invention, and the invention is not necessarily required to include all the configurations described above.

A part of a configuration of a certain embodiment can be replaced with a configuration of other embodiments, or a configuration of a certain embodiment can be added to the configurations of other embodiments.

A configuration of a certain embodiment can be added to, deleted from or replaced with configurations of other embodiments.

[Reference Signs List]

101 railroad vehicle, 102 linear laser beam, 103 light section sensor, 104 sensor rack, 105 vehicle moving distance measurement sensor, 201 laser source unit, 202 photographing unit, 203 imaging camera, 204 imaging lens, 205 narrow-band filter, 701 multiple wavelength laser source unit, 702 color camera, 901 linear object, 1001 field range of light section sensor, 1002 light section line of side surface of vehicle, 1003 light section line of linear object, 1301 light section line data array of string in rail coordinate system, 1302 linear component of light section line data array of string in rail coordinate system, 1303 vibrational component of light section line data array of string in rail coordinate system.

**Claims**

1. A method for measuring external shape of railroad vehicle by irradiating a plurality of linear laser beams (102) continuously to an outer peripheral surface of a railroad vehicle (101) and measuring the external shape of the railroad vehicle based on an irradiation position of the linear laser beams on the railroad vehicle and a two-dimensional plane projected image of the linear laser beams irradiated on the outer peripheral surface of the railroad vehicle, the method comprising:

   a photographing step of photographing a plurality of images of different linear laser beam intensities by switching intensity of the linear laser beams (102) while irradiating on the railroad vehicle (101),
   a selecting step of selecting a photographed image having a most suitable laser beam intensity for the measurement position from among a plurality of images having different linear laser beam intensities, wherein pixel values of a plurality of images having different linear laser beam intensities are compared, and a light section line having the pixel value that has not reached a saturation value and that has a highest value is selected, and

a calculating step of calculating the external shape of the railroad vehicle (101) from the selected photographed image.

2. The method for measuring external shape of railroad vehicle according to claim 1,
wherein the linear laser beam (102) comprises multiple wavelength ranges corresponding to respective RGB pixels of the photographed image.

3. The method for measuring external shape of railroad vehicle according to claim 1 or claim 2, the method further comprising

a deviation amount detection step of detecting an amount of deviation of the railroad vehicle (101) from a reference position of the rail at an irradiation position of the linear laser beam (102) on the railroad vehicle, and

a deviation amount correction step of correcting the detected amount of deviation of the railroad vehicle (101) from the reference position of the rail.

4. The method for measuring external shape of railroad vehicle according to claim 3,
wherein in the deviation amount detection step, a light section line of a linear object (901) attached to both ends of the vehicle (101) and a side surface of the vehicle are detected simultaneously.

5. The method for measuring external shape of railroad vehicle according to claim 4,
wherein in the deviation amount correction step, an amount of position variation of the light section line of the linear object (901) in a direction perpendicular to the rail is calculated, and the amount of position variation is added to or subtracted from external shape data of the vehicle (101).

6. A device for measuring external shape of railroad vehicle by irradiating a plurality of linear laser beams (102) continuously to an outer peripheral surface of a railroad vehicle (101) and measuring the external shape of the railroad vehicle based on an irradiation position of the linear laser beams on the railroad vehicle and a two-dimensional plane projected image of the linear laser beams irradiated on the outer peripheral surface of the railroad vehicle, the device comprising:

a mechanism (201) for generating the plurality of linear laser beams (102), a mechanism (105) for specifying an irradiation position on the railroad vehicle (101) onto which the plurality of linear laser beams are to be irradiated, a mechanism (111) for irradiating the plurality of linear laser beams with intensities of the linear laser beams switched, a mechanism (202) for photographing images of the plurality of linear laser beams irradiated onto the outer peripheral surface of the railroad vehicle, a mechanism (112) for selecting a photographed image of the linear laser beam most suitable for a measurement position from the photographed images of the plurality of linear laser beams, and a mechanism (113) for calculating the external shape of the railroad vehicle from the selected photographed image of the linear laser beam;

wherein the mechanism (111) for irradiating the plurality of linear laser beams with an intensity of the linear laser beams switched irradiates the linear laser beams (102) on the outer peripheral surface of the railroad vehicle (101) with the intensities of the linear laser beams switched,

the mechanism (202) for photographing images of the plurality of linear laser beams irradiated onto the outer peripheral surface of the railroad vehicle photographs a plurality of images of different linear laser beam intensities,

the mechanism (112) for selecting the photographed image of the linear laser beam most suitable for the measurement position selects the photographed image having the laser beam intensity most suitable for the measurement position from among the plurality of images between which the intensities of the plurality of linear laser beams differ, wherein it compares pixel values of a plurality of images having different linear laser beam intensities, and selects a light section line whose pixel value has not reached a saturation value and that shows a highest value, and

the mechanism (113) for calculating the external shape of the railroad vehicle calculates the external shape of the railroad vehicle (101) from the selected photographed image.

7. The device for measuring external shape of railroad vehicle according to claim 6,
wherein the linear laser beam (102) comprises multiple wavelength ranges corresponding to respective RGB pixels of the photographed image.

8. The device for measuring external shape of railroad vehicle according to claim 6 or claim 7,
further comprising a mechanism for detecting an amount of deviation of the railroad vehicle from a reference position of a rail of the railroad vehicle at the irradiation position onto which the linear laser beam (102) is irradiated on the railroad vehicle, and a mechanism for correcting the detected amount of deviation from the reference position of the rail of the railroad vehicle (101).

9. The device for measuring external shape of railroad vehicle according to claim 8,
wherein the mechanism for detecting the amount of deviation of the railroad vehicle from the reference position of the rail comprises a linear object (901) arranged on both ends of the railroad vehicle, the mechanism simultaneously detecting a light section line of the linear object and the side surface of the vehicle (101).

10. The device for measuring external shape of railroad vehicle according to claim 9,
wherein the mechanism for detecting the amount of deviation of the railroad vehicle from the reference position of the rail calculates an amount of position variation of light section line of the linear object (901) in a direction perpendicular to the rail, and adds or subtracts the amount of position variation to or from the external shape data of the vehicle (101).

**Patentansprüche**

1. Verfahren zum Messen der Außenform eines Schienenfahrzeugs durch fortlaufendes Strahlen mehrerer linearer Laserstrahlen (102) auf eine Außenumfangsfläche des Schienenfahrzeugs (101) und Messen der Außenform des Schienenfahrzeugs aufgrund einer Einstrahlposition der linearen Laserstrahlen auf dem Schienenfahrzeug und eines in zweidimensionaler Ebene projizierten Bilds der auf die Außenumfangsfläche des Schienenfahrzeugs einstrahlenden linearen Laserstrahlen, wobei das Verfahren Folgendes umfasst:

einen Fotografierschritt zum Fotografieren mehrerer Bilder verschiedener linearer Laserstrahlintensitäten durch Umschalten der Intensität der linearen Laserstrahlen (102) während des Einstrahlens auf das Schienenfahrzeug (101),
einen Wählschritt zum Wählen eines fotografierten Bilds, das für die Messposition die geeignetste Laserstrahlintensität aufweist, aus mehreren Bildern mit verschiedenen linearen Laserstrahlintensitäten, wobei Pixelwerte mehrerer Bilder mit verschiedenen linearen Laserstrahlintensitäten verglichen werden und eine Lichtschnittlinie mit einem Pixelwert, der den höchsten Wert aufweist, ohne einen Sättigungswert zu erreichen, gewählt wird, und
einen Berechnungsschritt zum Berechnen der Außenform des Schienenfahrzeugs (101) aus dem gewählten fotografierten Bild.

2. Verfahren zum Messen der Außenform eines Schienenfahrzeugs nach Anspruch 1,
wobei der lineare Laserstrahl (102) mehrere Wellenlängenbereiche umfasst, die jeweiligen RGB-Pixeln des fotografierten Bilds entsprechen.

3. Verfahren zum Messen der Außenform eines Schienenfahrzeugs nach Anspruch 1 oder 2, außerdem umfassend:

einen Abweichungsbetrags-Erfassungsschritt zum Erfassen des Betrags einer Abweichung des Schienenfahrzeugs (101) von einer Bezugsposition der Schiene an einer Einstrahlposition des linearen Laserstrahls (102) auf das Schienenfahrzeug, und
einen Abweichungsbetrags-Korrekturschritt zum Korrigieren des erfassten Betrags der Abweichung des Schienenfahrzeugs (101) von der Bezugsposition der Schiene.

4. Verfahren zum Messen der Außenform eines Schienenfahrzeugs nach Anspruch 3,
wobei im Abweichungsbetrags-Erfassungsschritt eine Lichtschnittlinie eines linearen Gegenstands (901), der an beiden Enden des Fahrzeugs (101) angebracht ist, und die Seitenfläche des Fahrzeugs gleichzeitig erfasst werden.

5. Verfahren zum Messen der Außenform eines Schienenfahrzeugs nach Anspruch 4,
wobei im Abweichungsbetrags-Korrekturschritt ein Betrag einer Positionsänderung der Lichtschnittlinie des linearen Objekts (901) in Richtung senkrecht zur Schiene berechnet und der Betrag der Positionsänderung zu Außenformdaten des Fahrzeugs (101) hinzugezählt oder von ihnen abgezogen wird.

6. Vorrichtung zum Messen der Außenform eines Schienenfahrzeugs durch fortlaufendes Strahlen mehrere linearer Laserstrahlen (102) auf eine Außenumfangsfläche des Schienenfahrzeugs (101) und Messen der Außenform des Schienenfahrzeugs aufgrund einer Einstrahlposition der linearen Laserstrahlen auf dem Schienenfahrzeug und eines in zweidimensionaler Ebene projizierten Bilds der auf die Außenumfangsfläche des Schienenfahrzeugs einstrahlenden linearen Laserstrahlen, wobei die Vorrichtung Folgendes umfasst:

einen Mechanismus (201) zum Erzeugen mehrerer linearer Laserstrahlen (102), einen Mechanismus (105) zum Festlegen einer Einstrahlposition auf dem Schienenfahrzeug (101), worauf die linearen Laserstrahlen einzustrahlen sind, einen Mechanismus (111) zum Einstrahlen der linearen Laserstrahlen unter Umschalten ihrer Intensitäten, einen Mechanismus (202) zum Fotografieren von Bildern der auf die Außenum-

fangsfläche des Schienenfahrzeugs einge-strahlten linearen Laserstrahlen, einen Mechanismus (112) zum Wählen eines fotografierten Bilds des linearen Laserstrahls, das für eine Messposition am geeignetsten ist, aus den fotografierten Bildern der linearen Laserstrahlen, und einen Mechanismus (113) zum Berechnen der Außenform des Schienenfahrzeugs aus dem gewählten fotografierten Bild des linearen Laserstrahls;

wobei der Mechanismus (111) zum Einstrahlen der linearen Laserstrahlen unter Umschalten ihrer Intensität die linearen Laserstrahlen (102) unter Umschalten ihrer Intensitäten auf die Außenumfangsfläche des Schienenfahrzeugs (101) einstrahlt,

der Mechanismus (202) zum Fotografieren von Bildern der auf die Außenumfangsfläche des Schienenfahrzeugs eingestrahlten linearen Laserstrahlen mehrere Bilder verschiedener linear Laserstrahlintensitäten fotografiert,

der Mechanismus (112) zum Wählen des fotografierten Bilds des linearen Laserstrahls, das für die Messposition am geeignetsten ist, aus den Bildern, zwischen denen die Intensitäten der linearen Laserstrahlen verschieden sind, das fotografierte Bild mit der Laserstrahlintensität auswählt, das für die Messposition am geeignetsten ist, wobei er Pixelwerte mehrerer Bilder mit verschiedenen linearen Laserstrahlintensitäten vergleicht und eine Lichtschnittlinie, deren Pixelwert den höchsten Wert zeigt, ohne einen Sättigungswert zu erreichen, auswählt, und

der Mechanismus (113) zum Berechnen der Außenform des Schienenfahrzeugs die Außenform des Schienenfahrzeugs (101) aus dem ausgewählten fotografierten Bild berechnet.

7. Vorrichtung zum Messen der Außenform eines Schienenfahrzeugs nach Anspruch 6, wobei der lineare Laserstrahl (102) mehrere Wellenlängenbereiche umfasst, die jeweiligen RGB-Pixeln des fotografierten Bilds entsprechen.

8. Vorrichtung zum Messen der Außenform eines Schienenfahrzeugs nach Anspruch 6 oder 7, mit einem Mechanismus zum Erfassen des Betrags einer Abweichung des Schienenfahrzeugs von einer Bezugsposition der Schiene des Schienenfahrzeugs an der Einstrahlposition, an der der lineare Laserstrahl (102) auf das Schienenfahrzeug einstrahlt, und einem Mechanismus zum Korrigieren des erfassten Betrags der Abweichung von der Bezugsposition der Schiene des Schienenfahrzeugs (101).

9. Vorrichtung zum Messen der Außenform eines Schienenfahrzeugs nach Anspruch 8, wobei der Mechanismus zum Erfassen des Betrags der Abweichung des Schienenfahrzeugs von der Bezugsposition der Schiene einen an beiden Enden des Schienenfahrzeugs angeordneten linearen Gegenstand (901) umfasst und der Mechanismus eine Lichtschnittlinie des linearen Gegenstands und die Seitenfläche des Fahrzeugs (101) gleichzeitig erfasst.

10. Vorrichtung zum Messen der Außenform eines Schienenfahrzeugs nach Anspruch 9, wobei der Mechanismus zum Erfassen des Betrags der Abweichung des Schienenfahrzeugs von der Bezugsposition der Schiene einen Betrag einer Positionsänderung der Lichtschnittlinie des linearen Gegenstands (901) in Richtung senkrecht zur Schiene berechnet und den Betrag der Positionsänderung zu Außenformdaten des Fahrzeugs (101) addiert oder von ihnen subtrahiert.

**Revendications**

1. Procédé de mesure d'une forme externe de véhicule ferroviaire en irradiant une pluralité de faisceaux laser linéaires (102) de façon continue sur une surface périphérique extérieure d'un véhicule ferroviaire (101) et en mesurant la forme externe du véhicule ferroviaire sur la base d'une position d'irradiation des faisceaux laser linéaires sur le véhicule ferroviaire et d'une image projetée sur un plan bidimensionnel des faisceaux laser linéaires irradiés sur la surface périphérique extérieure du véhicule ferroviaire, le procédé comprenant :

une étape de photographie pour photographier une pluralité d'images de différentes intensités de faisceaux laser linéaires en commutant une intensité des faisceaux laser linéaires (102) lors de l'irradiation sur le véhicule ferroviaire (101), une étape de sélection pour sélectionner une image photographiée ayant une intensité de faisceaux laser la plus appropriée pour la position de mesure parmi une pluralité d'images ayant différentes intensités de faisceaux laser linéaires, dans lequel des valeurs de pixels d'une pluralité d'images ayant différentes intensités de faisceaux laser linéaires sont comparées, et une ligne de section de lumière ayant la valeur de pixels qui n'a pas atteint une valeur de saturation et qui a une valeur la plus élevée est sélectionnée, et une étape de calcul pour calculer la forme externe du véhicule ferroviaire (101) à partir de l'image photographiée sélectionnée.

2. Procédé de mesure d'une forme externe de véhicule ferroviaire selon la revendication 1,
dans lequel le faisceau laser linéaire (102) comprend des plages de longueurs d'ondes multiples correspondant à des pixels RVB respectifs de l'image photographiée.

3. Procédé de mesure d'une forme externe de véhicule ferroviaire selon la revendication 1 ou la revendication 2, le procédé comprenant en outre

une étape de détection de quantité d'écart pour détecter une quantité d'écart du véhicule ferroviaire (101) par rapport à une position de référence du rail à une position d'irradiation du faisceau laser linéaire (102) sur le véhicule ferroviaire, et
une étape de correction de quantité d'écart pour corriger la quantité détectée d'écart du véhicule ferroviaire (101) par rapport à la position de référence du rail.

4. Procédé de mesure d'une forme externe de véhicule ferroviaire selon la revendication 3,
dans lequel, à l'étape de détection de quantité d'écart, une ligne de section de lumière d'un objet linéaire (901) fixé aux deux extrémités du véhicule (101) et une surface latérale du véhicule sont détectées simultanément.

5. Procédé de mesure d'une forme externe de véhicule ferroviaire selon la revendication 4,
dans lequel, à l'étape de correction de quantité d'écart, une quantité de variation de position de la ligne de section de lumière de l'objet linéaire (901) dans un sens perpendiculaire au rail est calculée, et la quantité de variation de position est ajoutée aux ou soustraite des données de forme externe du véhicule (101).

6. Dispositif de mesure d'une forme externe de véhicule ferroviaire en irradiant une pluralité de faisceaux laser linéaires (102) de façon continue sur une surface périphérique extérieure d'un véhicule ferroviaire (101) et en mesurant la forme externe du véhicule ferroviaire sur la base d'une position d'irradiation des faisceaux laser linéaires sur le véhicule ferroviaire et d'une image projetée sur un plan bidimensionnel des faisceaux laser linéaires irradiés sur la surface périphérique extérieure du véhicule ferroviaire, le dispositif comprenant :

un mécanisme (201) pour générer la pluralité de faisceaux laser linéaires (102), un mécanisme (105) pour spécifier une position d'irradiation sur le véhicule ferroviaire (101) sur lequel la pluralité de faisceaux laser linéaires doivent être irradiés, un mécanisme (111) pour irradier la pluralité de faisceaux laser linéaires avec des intensités des faisceaux laser linéaires commutées, un mécanisme (202) pour photographier des images de la pluralité de faisceaux laser linéaires irradiés sur la surface périphérique extérieure du véhicule ferroviaire, un mécanisme (112) pour sélectionner une image photographiée du faisceau laser linéaire le plus approprié pour une position de mesure parmi les images photographiées de la pluralité de faisceaux laser linéaires, et un mécanisme (113) pour calculer la forme externe du véhicule ferroviaire à partir de l'image photographiée sélectionnée du faisceau laser linéaire ;
dans lequel le mécanisme (111) pour irradier la pluralité de faisceaux laser linéaires avec une intensité des faisceaux laser linéaires commutée irradie les faisceaux laser linéaires (102) sur la surface périphérique extérieure du véhicule ferroviaire (101) avec les intensités des faisceaux laser linéaires commutées,
le mécanisme (202) pour photographier des images de la pluralité de faisceaux laser linéaires irradiés sur la surface périphérique extérieure du véhicule ferroviaire photographie une pluralité d'images de différentes intensités de faisceaux laser linéaires,
le mécanisme (112) pour sélectionner l'image photographiée du faisceau laser linéaire le plus approprié pour la position de mesure sélectionne l'image photographiée ayant l'intensité de faisceaux laser la plus appropriée pour la position de mesure parmi la pluralité d'images entre lesquelles les intensités de la pluralité de faisceaux laser linéaires diffèrent, dans lequel il compare des valeurs de pixels d'une pluralité d'images ayant différentes intensités de faisceaux laser linéaires, et sélectionne une ligne de section de lumière dont la valeur de pixels n'a pas atteint une valeur de saturation et qui montre une valeur la plus élevée, et
le mécanisme (113) pour calculer la forme externe du véhicule ferroviaire calcule la forme externe du véhicule ferroviaire (101) à partir de l'image photographiée sélectionnée.

7. Dispositif de mesure d'une forme externe de véhicule ferroviaire selon la revendication 6,
dans lequel le faisceau laser linéaire (102) comprend des plages de longueurs d'ondes multiples correspondant à des pixels RVB respectifs de l'image photographiée.

8. Dispositif de mesure d'une forme externe de véhicule ferroviaire selon la revendication 6 ou la revendication 7,
comprenant en outre un mécanisme pour détecter une quantité d'écart du véhicule ferroviaire par rapport à une position de référence d'un rail du véhicule ferroviaire à la position d'irradiation sur laquelle le faisceau laser linéaire (102) est irradié sur le véhicule ferroviaire, et un mécanisme pour corriger la quantité détectée d'écart par rapport à la position de référence du rail du véhicule ferroviaire (101).

9. Dispositif de mesure d'une forme externe de véhicule ferroviaire selon la revendication 8, dans lequel le mécanisme pour détecter la quantité d'écart du véhicule ferroviaire par rapport à la position de référence du rail comprend un objet linéaire (901) agencé sur les deux extrémités du véhicule ferroviaire, le mécanisme détectant simultanément une ligne de section de lumière de l'objet linéaire et la surface latérale du véhicule (101).

10. Dispositif de mesure d'une forme externe de véhicule ferroviaire selon la revendication 9, dans lequel le mécanisme pour détecter la quantité d'écart du véhicule ferroviaire par rapport à la position de référence du rail calcule une quantité de variation de position de ligne de section de lumière de l'objet linéaire (901) dans un sens perpendiculaire au rail, et ajoute ou soustrait la quantité de variation de position aux ou des données de forme externe du véhicule (101).

FIG.1A

PERSPECTIVE VIEW

FIG.1B

FRONT VIEW

FIG. 2

FIG.3

LASER BEAM INTENSITY
MODULATION
(LASER INTENSITY
MODULATION CYCLE : F(Hz) )

HIGH

MEDIUM

LOW

· · · · · ·          · · · · ·

MODULATION CYCLE PERIOD : T(s)

PHOTOGRAPHING
TIMING
(PHOTOGRAPHING
RATE : F(fps))

· · · · · ·          · · · · ·

1/F(s)

TIME (s)

FIG. 4

START MEASUREMENT

START VEHICLE MOVEMENT — S401

MEASUREMENT START POSITION? — S402 → NO

YES

START LASER INTENSITY MODULATION (PERIOD: T(s)) — S403

START PHOTOGRAPHING LIGHT SECTION LINE (PHOTOGRAPHING RATE: F(fps)) — S404

MOVED FOR PREDETERMINED DISTANCE? — S405 → YES

NO

MEASUREMENT END POSITION? — S409

NO

YES

END MEASUREMENT

CALCULATE EXTERNAL SHAPE OF VEHICLE — S406

VEHICLE GAUGE EXCEEDED? — S407 → NO

YES

DISPLAY POSITION HAVING EXCEEDED VEHICLE GAUGE — S408

FIG. 5

```
                    ┌─────────────┐
                    │    START    │
                    └──────┬──────┘
                           │
              ┌────────────▼────────────┐
              │   DETECT LIGHT SECTION  │ ~ SS501
              │   LINE PIXELS IN        │
              │   PROCESSING IMAGE      │
              └────────────┬────────────┘
                           │
              ┌────────────▼────────────┐
              │   CALCULATE DETECTED    │ ~ SS502
              │   MEAN PIXEL VALUE M[i] │
              │   AND STORE VALUE IN    │
              │   MEMORY                │
              └────────────┬────────────┘
                           │
              ┌────────────▼────────────┐
              │   UPDATE NUMBER         │ ~ SS503
              │   OF PROCESSED          │
              │   IMAGE i = i+1         │
              └────────────┬────────────┘
                           │
                   ◇───────▼────────◇
          NO      NUMBER OF            ~ SS504
        ◄─────   PROCESSED IMAGE (i)
                 HAS REACHED SINGLE
                 PROCESSING UNIT
                 NUMBER (N)?
                   ◇───────┬────────◇
                           │ YES
                   ◇───────▼────────◇
                    M[k] IS NOT        ~ SS505       ┌──────────────────┐
                    SATURATED            YES         │  UPDATE MAXIMUM  │ ~ SS506
                    M[k] > M         ─────────────►  │  MEAN PIXEL VALUE│
                   ◇───────┬────────◇                │  Ks=k, M=M[Ks]   │
                           │ NO                       └────────┬─────────┘
                           │◄─────────────────────────────────┘
              ┌────────────▼────────────┐
              │   UPDATE NUMBER         │ ~ SS507
              │   OF COMPARED           │
              │   IMAGES k = k+1        │
              └────────────┬────────────┘
                           │
                   ◇───────▼────────◇
          NO      NUMBER OF            ~ SS508
        ◄─────   COMPARED IMAGES (k)
                 HAS REACHED SINGLE
                 PROCESSING UNIT
                 NUMBER (N)?
                   ◇───────┬────────◇
                           │ YES
              ┌────────────▼────────────┐
              │   CALCULATE VEHICLE     │ ~ SS509
              │   SHAPE USING IMAGE     │
              │   OF IMAGE NUMBER (Ks)  │
              └────────────┬────────────┘
                           │
                    ┌──────▼──────┐
                    │     END     │
                    └─────────────┘
```

## FIG. 6

START
MEASUREMENT

START VEHICLE
MOVEMENT → S601

MEASUREMENT
START POSITION? → S602 — NO

YES

START LASER INTENSITY
MODULATION (PERIOD: T(s)) → S603

START PHOTOGRAPHING
LIGHT SECTION LINE
(PHOTOGRAPHING RATE: F(fps)) → S604

NO

MEASUREMENT
END POSITION? → S605

YES

PROCESSING OF
ALL MEASUREMENT
IMAGES COMPLETED? → S606 — YES → END MEASUREMENT

NO

CALCULATE
EXTERNAL SHAPE
OF VEHICLE → S607

NO

VEHICLE
GAUGE EXCEEDED? → S608

YES

DISPLAY POSITION
HAVING EXCEEDED
VEHICLE GAUGE → S609

FIG. 7

# FIG. 8

```
        START

SEPARATE IMAGE OF
PROCESSING IMAGE INTO        SS801
RGB COMPONENTS

CALCULATE SUM OF PIXEL
VALUES OF RESPECTIVE         SS802
COMPONENTS OF RGB

DETECT LIGHT SECTION         SS803
LINE PIXEL

CALCULATE DETECTED
MEAN PIXEL VALUE M [i] AND   SS804
STORE VALUE IN MEMORY

UPDATE NUMBER
OF PROCESSED                 SS805
IMAGES i = i+1

        NUMBER OF            SS806
NO   PROCESSED IMAGES (i) HAS
     REACHED SINGLE PROCESS
       UNIT NUMBER (N)?
              YES


·M [k] IS NOT                SS807
   SATURATED          NO
·M [k] > M
              YES

UPDATE MAXIMUM               SS808
MEAN PIXEL VALUE
Ks=k, M=M[Ks]

UPDATE NUMBER OF             SS809
COMPARED IMAGES
k = k+1

        NUMBER OF            SS810
NO   COMPARED IMAGES (k) HAS
     REACHED SINGLE PROCESSING
       UNIT NUMBER (N)?
              YES

CALCULATE VEHICLE            SS811
SHAPE USING IMAGE OF
IMAGE NUMBER (Ks)

        END
```

## FIG.9A

PERSPECTIVE VIEW

| LASER INTENSITY CONTROL UNIT | OVERALL CONTROL UNIT | RESULT OUTPUT UNIT |
| IMAGE SELECTION AND SHAPE CALCULATION UNIT | VEHICLE MEANDERING CALCULATION UNIT | |

## FIG.9B

FRONT VIEW

**FIG.10A**

VARIATION OF
VEHICLE POSITION

**FIG.10B**

POSITION
VARIATION

LIGHT SECTION LINE IMAGE

FIG.11

```
         ( START
          MEASUREMENT )
                │
                ▼
        ┌──────────────┐
        │ START VEHICLE │ ── S1101
        │  MOVEMENT     │
        └──────────────┘
                │
                ▼
            ◇ MEASUREMENT ◇ ── S1102    NO
             START POSITION?  ──────────►
                │
               YES
                ▼
        ┌──────────────────┐
        │ START LASER       │ ── S1103
        │ INTENSITY MODULATION │
        │ (PERIOD: T(s))    │
        └──────────────────┘
                │
                ▼
     ┌────────────────────────┐
     │ START PHOTOGRAPHING     │ ── S1104
     │ LIGHT SECTION LINE      │
     │ (PHOTOGRAPHING RATE: F(fps)) │
     └────────────────────────┘
                │
                ▼
   NO    ◇ MEASUREMENT ◇ ── S1105
   ◄──── END POSITION?
                │
               YES
                ▼
   ◇ PROCESSING OF ◇ ── S1106    NO
   ALL MEASUREMENT IMAGES ──────────►  ( END
     COMPLETED?                         MEASUREMENT )
                │
               YES
                ▼
        ┌──────────────┐
        │ CALCULATE EXTERNAL │ ── S1107
        │ SHAPE OF VEHICLE   │
        └──────────────┘
                │
                ▼
     ┌────────────────────────┐
     │ CALCULATE AMOUNT OF     │ ── S1108
     │ MEANDERING OF VEHICLE   │
     │ AND PERFORM CORRECTION  │
     └────────────────────────┘
                │
                ▼
   NO    ◇ VEHICLE GAUGE ◇ ── S1109
   ◄──── EXCEEDED?
                │
               YES
                ▼
        ┌──────────────┐
        │ DISPLAY POSITION  │ ── S1110
        │ HAVING EXCEEDED   │
        │ VEHICLE GAUGE     │
        └──────────────┘
```

# FIG.12

```
        ┌─────────────┐
        │   START     │
        │  PROCESS    │
        └─────────────┘
               │
               ▼
   ┌──────────────────────┐
   │  SELECT LIGHT SECTION │   SS1201
   │  LINE OF STRING FROM  │
   │ SINGLE PROCESSING UNIT│
   └──────────────────────┘
               │
               ▼
     ┌──────────────────┐
     │   DETECT LIGHT    │   SS1202
     │  SECTION LINE     │
     │   OF STRING       │
     └──────────────────┘
               │
               ▼
          ╱─────────╲        SS1203
         ╱ PROCESS ALL╲        NO
        ◄ DESIGNATED   ►───────┐
         ╲  IMAGES    ╱        │
          ╲─────────╱         │
               │ YES
               ▼
   ┌──────────────────────┐
   │  CONVERT INTO RAIL    │   SS1204
   │ COORDINATE SYSTEM     │
   │    DATA ARRAY         │
   └──────────────────────┘
               │
               ▼
   ┌──────────────────────┐
   │ REMOVE INCLINATION    │   SS1205
   │  COMPONENT OF         │
   │     STRING            │
   └──────────────────────┘
               │
               ▼
     ┌──────────────────┐
     │  CONVERT INTO     │   SS1206
     │   TIME DATA       │
     │    ARRAY          │
     └──────────────────┘
               │
               ▼
   ┌──────────────────────┐
   │ REMOVE VIBRATION      │   SS1207
   │  COMPONENT OF         │
   │     STRING            │
   └──────────────────────┘
               │
               ▼
   ┌──────────────────────┐
   │ CORRECT VEHICLE       │   SS1208
   │ EXTERNAL SHAPE        │
   │     DATA              │
   └──────────────────────┘
               │
               ▼
        ┌─────────────┐
        │    END      │
        │  PROCESS    │
        └─────────────┘
```

## FIG.13

(a)

POSITION PERPENDICULAR TO RAIL DIRECTION

POSITION IN RAIL DIRECTION

1301

(b)

POSITION PERPENDICULAR TO RAIL DIRECTION

POSITION IN RAIL DIRECTION

1302

(c)

POSITION PERPENDICULAR TO RAIL DIRECTION

POSITION IN RAIL DIRECTION

1301

(d)

POSITION PERPENDICULAR TO RAIL DIRECTION

POSITION IN RAIL DIRECTION

1303

(e)

POSITION PERPENDICULAR TO RAIL DIRECTION

POSITION IN RAIL DIRECTION

1301

**EP 3 524 927 B1**

## REFERENCES CITED IN THE DESCRIPTION

**Patent documents cited in the description**

- JP 2012007950 A